# FASCICULE DE BREVET EUROPEEN

(11) **EP 0 806 402 B1**
(45) Date de publication et mention de la délivrance du brevet: **24.01.2001**
(21) Numéro de dépôt: 97401008.4
(22) Date de dépôt: 05.05.1997
(51) Int. Cl.: C04B 37/00

(54) **Assemblage par brasage de matériaux céramiques contenant du carbure de silicum**
Verbindung siliciumcarbidhaltiger keramischer Materialien durch Hartlötung
Joining silicon carbide containing ceramic materials by brazing

(30) Priorité: 07.05.1996 FR 9605708
(43) Date de publication de la demande: 12.11.1997
(73) Titulaire: COMMISSARIAT A L'ENERGIE ATOMIQUE, 75015 Paris (FR)
(72) Inventeur: Chaumat, Gilles, 38640 Claix (FR); Coing-Boyat, Gisèle, 38360 Sassenage (FR)
(74) Mandataire: Dubois-Chabert, Guy

(56) Documents cités:
- US-A- 3 813 759

## Description

### Domaine technique

La présente invention concerne un assemblage par brasage, de matériaux céramiques contenant du carbure de silicium, ayant une très grande résistance à l'oxydation.

Comme pour toutes les céramiques techniques en général, il est difficile de fabriquer une structure de forme complexe. Il est donc préférable de fabriquer la structure de forme complexe à partir d'éléments en céramique de forme simple que l'on assemble, par brasage.

Le carbure de silicium SiC fait partie de la famille des céramiques non oxydes et présente des propriétés physiques et chimiques intéressantes telles qu'une durée de vie élevée, une conductivité thermique importante, une grande résistance aux températures qui permet de classer le SiC dans les matériaux réfractaires allant jusqu'à 1800°C, et une bonne résistance à la corrosion aqueuse et à l'oxydation même à haute température. C'est pour cela que le carbure de silicium est utilisé dans les installations du génie chimique, notamment dans la fabrication des gros échangeurs thermiques industriels, et du génie énergétique.

Cependant, dans les installations du génie chimique, son utilisation est très souvent limitée par les problèmes d'assemblage car les assemblages peuvent être en contact avec des effluents acides contenant de l'acide hydrofluorique.

Il est donc nécessaire que le composé utilisé pour l'assemblage des éléments en céramique SiC présente non seulement les mêmes propriétés physiques et chimiques que ces éléments, mais soit également compatible avec le carbure de silicium et présente de bonnes propriétés de jonction avec le carbure de silicium afin d'assurer un assemblage homogène et étanche.

L'assemblage des matériaux céramiques SiC par collage ne peut pas être utilisé, les colles étant des produits organiques (résines organiques) vieillissant très mal à des températures supérieures à 100°C.

Par ailleurs, l'assemblage par soudage par diffusion entre deux substrats en SiC est impossible à réaliser, le domaine de stabilité du carbure de silicium se situant à des températures inférieures à 1800°C.

Les techniques classiques d'assemblage faisant intervenir un faisceau d'énergie sans alliage d'apport telles que le soudage à électrode de tungstène sous gaz inerte (TIG), le soudage par bombardement électronique (BE) ou par laser, sont également inutilisables car il est impossible de faire fondre directement du carbure de silicium sans le détruire.

Le brasage est la technique utilisée, dans l'état de l'art connu, pour réaliser des assemblages réfractaires d'éléments en céramique SiC.

Le brasage est une technique d'assemblage consistant notamment à assembler des éléments en céramique, à l'aide d'un alliage d'apport à l'état liquide, ayant une température de fusion inférieure à celle des pièces à réunir et présentant une bonne mouillabilité pour les surfaces à assembler, ces dernières ne participant pas par fusion à la constitution de l'assemblage.

La mouillabilité est la capacité d'un liquide à s'étaler sur un matériau solide. La mouillabilité est une propriété physique mesurable, elle se traduit par l'angle de raccordement du liquide étudié avec la surface du matériau avec lequel le liquide est en contact. L'angle de raccordement ou angle de mouillabilité est d'autant plus faible que la mouillabilité pour le matériau, est plus grande. Ainsi, une mouillabilité parfaite se traduit par un angle α=0°, une mouillabilité imparfaite se traduit par un angle α compris entre 0° et 90°, une mouillabilité nulle se traduit par un angle de mouillabilité nulle α supérieur à 90°.

Afin d'assurer un assemblage homogène et étanche entre les éléments céramiques à l'interface de la brasure et desdits éléments céramiques, il est impératif que la brasure utilisée présente une bonne mouillabilité pour la céramique Sic.

Il est donc nécessaire d'utiliser pour l'assemblage SiC-SiC une brasure stable, résistant aux élévations de température, à l'oxydation par l'air et aux effluents fluorés, aussi bien à température ambiante qu'aux températures supérieures à 50°C, présentant une bonne mouillabilité et ayant de bonnes propriétés mécaniques.

De nombreuses études ont tenté de résoudre ces différents problèmes, notamment en utilisant des brasures comprenant des métaux.

### Art antérieur

Il est connu que les céramiques contenant du carbure de silicium sont très réactives avec la plupart des métaux de transition : Ni, Fe, Cu, Mn, Co, Cr, Pt, Au, Ag, Pd, Ti, Zr, Hf, etc... Un alliage de brasage contenant une forte proportion de ces éléments réagit violemment avec le carbure de silicium avec création de nombreuses porosités et/ou de composés définis fragilisant, tels que des carbures et des siliciures correspondant aux métaux de transition, et ce dès 700°C.

Ainsi, le document "Development of New Active Filler Metals for Joining Silicon Carbide and Nitride" E. LUGSCHEIDER and W. TILLMANN, BABS 6th INTERNATIONAL CONFERENCE HIGH TECHNOLOGY JOINING-September 1991 Stratford-upon-Avon, pages 1 à 16, décrit l'utilisation d'une brasure ternaire Cu-Pt-Nb (cuivre-platine-niobium) dans laquelle Nb a pour rôle de stabiliser la brasure à une température de brasage de 1100°C. Cependant, bien que la réactivité entre Nb et SiC soit faible, la céramique est largement décomposée au niveau de l'assemblage, à l'interface brasure/céramique, et rend cet assemblage fragile.

Bien que ce document évoque l'utilisation de métaux précieux afin d'obtenir des assemblages résistant à l'oxydation, il ne mentionne cette utilisation de métaux précieux que dans des brasures de composition ternaire.

Le document "A REVIEW OF SILICON CARBIDE/METAL INTERACTIONS WITH RELEVANCE TO SILICON CARBIDE JOINING", B.H. RABIN (April 1991) EG & G IDAHO, INC., Idaho Falls, ID 83415 pages 1 à 14 est une étude concernant les interactions entre des métaux tels que Ni, Fe, Ti, Cr, Al, Cu, Pd, Mo, W, V, Ta, Nb, Hf, Zr et le carbure de silicium à haute température.

Cette étude est réalisée dans le but de comprendre lesdites interactions et de trouver le moyen le plus approprié pour assembler des matériaux en carbure de silicium, ces assemblages devant résister à des températures élevées et à l'oxydation. En application des résultats obtenus par cette étude, ce document décrit l'utilisation d'une brasure métallique. Les brasures à base de Ni ou de Fe apparaissant comme étant trop réactives avec le carbure de silicium, ce document préconise, afin de réduire cette réactivité, d'ajouter à l'alliage de brasure du silicium ou du carbone. Dans le même but, alternativement, ce document cite la possibilité d'ajouter à l'alliage, en plus des composants sus-cités, un métal précieux comme le Pd ou le Pt, mais aucune application, composition et résultats ne sont décrits dans ce document concernant ce type de brasure.

La brasure préférée de ce document est une brasure à base de Ti, qui donne un assemblage SiC-SiC présentant de bonnes propriétés mécaniques à une température allant jusqu'à 1000°C, mais cet assemblage n'est pas stable et il est très sensible à l'oxydation.

D'autre part, ce document décrit l'utilisation d'un soudage à l'état solide en utilisant des métaux, pour assembler des matériaux céramiques de type SiC. Cet assemblage utilisant le soudage à l'état solide est plus résistant à haute température que l'assemblage par brasure, mais il est très sensible à l'oxydation.

Le brevet US-A-3,813,759 concernant le brasage de matériaux de carbure de silicium revendique l'utilisation d'une brasure consistant en un alliage de silicium et d'un ou de plusieurs métaux. Les métaux concernés sont le Fe, Au, Ni, Pd, Pt, Cr et Ti et l'alliage de brasure contient au moins 5% atomique de silicium.

Cependant, ce document décrit plus particulièrement l'utilisation d'alliages de métaux et de silicium dans lesquels le silicium a un pourcentage atomique supérieur à 50%. Or, ces brasures riches en silicium sont très sensibles à la corrosion par l'oxydation et ne permettent pas d'obtenir des joints de brasure résistants à un effluent fluorhydrique à 50% (mélange d'acide fluorhydrique à 40% et d'acide nitrique) ou à des solutions d'acide fluorhydrique à 40% bouillant.

### Exposé de l'invention

La présente invention a précisément pour but de fournir un nouvel assemblage par brasage, qui permet de résoudre tous les problèmes évoqués ci-dessus, ainsi qu'un procédé de fabrication dudit assemblage.

Selon l'invention, cet assemblage d'éléments céramiques comprenant du carbure de silicium, est réalisé au moyen d'un joint de brasure, formé d'un alliage de brasure de silicium (Si) et de rhodium (Rh), résistant au fluor à des températures supérieures à 50°C.

On précise que, dans cette invention, l'expression "résistant au fluor" signifie que l'alliage résiste aux fluorures et à tout type de produits fluorés tels que les effluents fluorés, l'acide fluorhydrique, etc...

Selon l'invention, les proportions atomiques de Si et de Rh sont choisies de façon à obtenir des alliages résistant aux fluorures à des températures supérieures à 50°C. Ce résultat est surprenant car les alliages connus à forte teneur en silicium tels que ceux du document US-A-3,813,759 ne possédent pas cette propriété.

Dans l'alliage de brasure de la présente invention, le silicium représente de 40 à 60% en atome, de préférence 50% en atome dudit alliage.

Le système utilisé est donc Si-Rh. Pour ce système, nous avons constaté qu'il était nécessaire d'utiliser un alliage de brasure, ou brasure, ayant une gamme de composition bien définie avec une teneur en Si minimum si l'on veut s'affranchir des problèmes de réactivité entre le métal de la brasure et le carbure de silicium et une teneur en Si maximum pour limiter la corrosion de la brasure par l'oxygène de l'air et par des effluents fluorés.

Le procédé d'assemblage d'éléments céramiques comprenant du SiC selon la présente invention comprend les étapes de mise en place d'un alliage de brasure de Si et de Rh, entre les surfaces des éléments céramiques à assembler, et de chauffage de l'ensemble à une température de brasage de 1450°C à 1600°C pour obtenir le brasage.

La mise en place de la brasure entre les surfaces à assembler peut être effectuée selon diverses techniques, on peut utiliser en particulier les techniques d'enduction ou de revêtement d'au moins l'une des surfaces par l'alliage de brasure.

De préférence, la brasure est mise en place par enduction des surfaces à assembler au moyen d'une suspension de particules d'alliage de brasure dans un liant volatilisable à une température inférieure à 1000°C.

Cette suspension de particules d'alliage de brasure peut être préparée par fusion de Si et de Rh de façon à obtenir un alliage, refroidissement de l'alliage de façon à obtenir une brasure solide, broyage de la brasure solide sous forme de poudre et mélange de la poudre avec le liant.

Le silicium utilisé pour préparer la brasure sous forme de suspension est du silicium sous forme de morceaux.

Le rhodium, sous forme de fils, et le silicium sont introduits dans un creuset par exemple en alumine, puis chauffés sous vide secondaire à une température comprise entre 1450 et 1600°C. La fusion est de préférence obtenue à 1500°C.

Le chauffage est maintenu pendant 5 minutes afin de faire fondre les différents constituants et d'obtenir un mélange homogène. Le mélange homogène est ensuite refroidi, et on obtient des blocs de brasure fragiles. Ces blocs de brasure fragiles sont broyés par exemple au mortier, sous forme d'une poudre dont les grains ont un diamètre de 0,05 à 0,1 mm.

La brasure sous forme de poudre ainsi formée est mélangée avec un liant organique liquide par exemple de type NICROBRAZ, de façon à créer une suspension.

Les liants organiques liquides sont choisis de telle sorte qu'ils soient volatilisés lors du chauffage à la température de brasage, afin qu'il ne reste plus que l'alliage de Si et de Rh à la température de brasage.

Selon une variante, on peut appliquer la brasure par métallisation des surfaces de SiC à assembler, suivie par un cycle de recuit thermique.

La métallisation consiste à appliquer directement l'alliage de brasure sur les surfaces SiC à assembler.

Des techniques de dépôt pour la métallisation peuvent être le dépôt en phase vapeur, la pulvérisation, la décomposition thermique après métallisation, la réduction chimique, la pulvérisation cathodique "sputtering", l'évaporation, l'électrolyse, etc...

Le traitement de surface préalable des éléments céramiques à assembler n'est pas nécessaire. Cependant, il est préférable de les dégraisser et de les sécher avant de les enduire avec la brasure.

On obtient ainsi deux surfaces d'éléments céramiques prêtes à être brasées.

Lesdites surfaces sont mises en contact l'une avec l'autre, et disposées dans un four pour le chauffage de brasage.

Le chauffage peut être réalisé par différentes techniques telles que le laser, le faisceau d'électrons, l'induction et la chauffe intermédiaire d'un résistor.

Le chauffage préféré est réalisé en utilisant un four à résistor, fonctionnant sous vide ou sous gaz neutre, car industriellement cette technique est facile à mettre en oeuvre.

Le chauffage de brasage peut être effectué selon un cycle comprenant un premier palier de chauffage et un deuxième palier de chauffage. Le premier palier à une température de 200 à 400°C, de préférence à environ 200°C est effectué pendant une durée de 1 heure. Ce premier palier de chauffage permet un dégazage de la brasure, afin de rendre plus homogène l'assemblage final, et permet également de bien mouiller les deux surfaces des éléments de céramique à assembler.

L'alliage de brasure est un alliage de Si-Rh, dans lequel Si représente 40 à 60% en atome de l'alliage, la température de brasage est de 1450 à 1600°C, de préférence 1500°C.

Le brasage est effectué sous vide secondaire à une pression de 10⁻² Pa, cette faible pression entraîne un dégazage de la brasure lors du brasage.

On obtient un assemblage de type SiC/RhSi/SiC.

L'assemblage présente l'avantage d'être très résistant à la corrosion par des effluents au fluor même à des températures supérieures à 100°C. Cette résistance autorise donc des durées de fonctionnement très importantes pour des installations comportant les assemblages selon la présente invention.

D'autre part, cet assemblage présente l'avantage d'avoir une température de brasage suffisamment élevée pour qu'il puisse être soumis sans être endommagé à des températures où les résines et les colles organiques ne peuvent pas être utilisées.

L'alliage de brasure présente encore l'avantage d'être très bien adapté aux céramiques contenant du carbure de silicium du point de vue de la compatibilité chimique, car sa réactivité est contrôlée.

En ce qui concerne la mouillabilité, l'angle de mouillage de la brasure selon l'invention est inférieur à 30°, ce qui traduit un bon remplissage du joint entre la brasure et les surfaces des éléments céramiques à assembler.

De plus, l'assemblage a une tenue mécanique équivalente à la tenue intrinsèque du carbure de silicium.

Cet assemblage a par ailleurs l'avantage d'avoir une très bonne résistance à l'oxydation et ce, jusqu'à des températures supérieures à 1000°C sous air.

Des compositions de la brasure selon la présente invention sont peu sensibles aux conditions opératoires du brasage en raison de la réactivité contrôlée à l'interface brasure/SiC.

Un avantage supplémentaire apporté par la présente invention est que l'assemblage est simple à mettre en oeuvre. En effet, aucun traitement de surface des éléments en carbure de silicium n'est nécessaire, le brasage est direct.

De plus, contrairement aux brasures réactives conventionnelles utilisées pour les céramiques, la qualité de l'atmosphère du four de brasage n'est pas critique pour la brasure selon l'invention.

Ainsi, des fours industriels de qualité moyenne, c'est-à-dire ne permettant pas de contrôler de façon précise la nature de l'atmosphère, peuvent être utilisés. Les fours de qualité moyenne sont des fours ne permettant pas d'obtenir un vide meilleur que 10⁻¹ Pa ou des fours utilisant un gaz neutre standard ayant beaucoup d'impuretés dont de l'eau et de l'oxygène.

Dans notre cas, des fours de qualité moyenne sont utilisables car le brasage avec le procédé de la présente invention tolère même une pression partielle d'oxygène non nulle par exemple de 10⁻¹ Pa d'oxygène.

D'autres caractéristiques et avantages de l'invention apparaîtront mieux à la lecture l'exemple suivant, donné bien entendu à titre illustratif et non limitatif.

### Exemple

Cet exemple porte sur un procédé d'assemblage d'éléments céramiques SiC utilisant une brasure Si-Rh.

Une brasure comprenant 50% en atome de Rh et 50% en atome de Si est formée à partir de rhodium sous forme de fil et de silicium sous forme de morceaux.

Le rhodium et le silicium ont été introduits dans un creuset en alumine puis chauffés sous vide à 1500°C pendant 5 minutes pour faire fondre les deux composants et synthétiser la brasure.

On obtient des morceaux de brasure cassants qui sont broyés au mortier sous forme d'une poudre dont le diamètre de grains est de 0,05 à 0,1 mm.

La poudre de brasure est ensuite mélangée avec un liant organique liquide, du cément de type NICROBRAZ, pour obtenir une suspension de brasure.

Les deux surfaces des éléments de carbure de silicium à braser sont enduites avec cette suspension après avoir été dégraissées et séchées.

Les deux surfaces enduites, prêtes à être brasées, sont mises en contact et disposées dans un four sous vide secondaire pour subir un premier et un deuxième paliers de chauffage :
- un premier palier de chauffage à 300°C pendant 1 heure pour un dégazage de la brasure, et
- un deuxième palier de chauffage pour le brasage dans les conditions opératoires suivantes :
   - température de brasage : 1500°C,
   - durée du palier de brasage : 5 minutes, et
   - vide secondaire : 10⁻² Pa.

L'assemblage SiC/RhSi/SiC obtenu est ensuite refroidi.

Cet assemblage est alors soumis à un test de résistance à la corrosion par de l'acide fluorhydrique.

L'assemblage SiC/RhSi/SiC a été pesé puis introduit dans un autoclave contenant une solution d'acide fluorhydrique à 40%, à une température de 100°C pendant une durée de 1000 heures.

La pesée après cet essai de corrosion ne montre aucune perte de masse de l'assemblage SiC/RhSi/SiC.

L'analyse métallographique ne révèle aucune attaque chimique de l'assemblage induite par ce bain fluoré.

Cet exemple, sans être limitatif, illustre clairement les grandes qualités du joint de brasure selon l'invention, destiné à l'assemblage des céramiques SiC. Ainsi, le joint de brasure de la présente invention présente toutes les qualités requises pour les assemblages SiC/SiC, notament une très bonne tenue mécanique et une grande stabilité thermique, et résoud tous les problèmes posés dans l'art antérieur. En effet, le joint de brasure selon l'invention présente notamment une bonne adhérence avec les surfaces céramiques SiC à assembler (l'angle de mouillage est inférieur à 30°) et l'avantage d'être très résistant à la corrosion par des effluents fluorés.

Par ailleurs, l'assemblage de la présente invention présente l'avantage d'une grande simplicité de mise en oeuvre.

## Revendications

1. Assemblage d'éléments céramiques comprenant du SiC, au moyen d'un joint de brasure, caractérisé en ce que le joint de brasure est formé d'un alliage de brasure de Si et de Rh, résistant au fluor à des températures supérieures à 50°C, dans lequel Si représente 40 à 60% en atome dudit alliage.

2. Assemblage selon la revendication 1, caractérisé en ce que Si représente 50% en atome dudit alliage.

3. Procédé d'assemblage d'éléments céramiques comprenant du SiC, caractérisé en ce qu'il comprend les étapes de mise en place d'un alliage de brasure de Si et de Rh, entre les surfaces des éléments céramiques à assembler, et de chauffage de l'ensemble à une température de brasage de 1450°C à 1600°C pour obtenir le brasage, dans lequel Si représente 40 à 60% en atome dudit alliage.

4. Procédé de fabrication d'un assemblage selon la revendication 3, caractérisé en ce que la brasure est mise en place par enduction des surfaces au moyen d'une suspension de particules d'alliage de brasure dans un liant volatilisable à une température inférieure à 1000°C.

5. Procédé selon la revendication 4, caractérisé en ce que la suspension est préparée par fusion de silicium et de rhodium, de façon à obtenir un alliage, refroidissement de l'alliage de façon à obtenir une brasure solide, broyage de la brasure solide sous forme de poudre et mélange de la poudre avec le liant.

6. Procédé selon la revendication 5, caractérisé en ce que la fusion est effectuée sous vide secondaire à une température comprise entre 1450 et 1600°C.

7. Procédé selon la revendication 6, caractérisé en ce que la poudre de brasure a une dimension de grains de 0,05 à 0,1 mm.

8. Procédé de fabrication d'un assemblage selon l'une quelconque des revendications 3 à 7, caractérisé en ce que le chauffage est effectué selon un cycle comprenant un premier palier de chauffage à une température de 200 à 400°C et un deuxième palier de chauffage à la température de brasage.

9. Procédé selon la revendication 8, caractérisé en ce que la température de brasage est de 1450 à 1600°C.

## Patentansprüche

1. Verbindung von SiC-enthaltenden keramischen Elementen durch eine Lötverbindung,
**dadurch gekennzeichnet,**
dass die Lötverbindung durch eine Lotlegierung aus Si und Rh gebildet wird, die bei Temperaturen über 50°C Fluor-beständig bzw. -fest ist und in der Si 40 bis 60 Atomprozent der genannten Legierung bildet.

2. Verbindung nach Anspruch 1, dadurch gekennzeichnet, dass Si 50 Atomprozent der genannten Legierung bildet.

3. Verfahren zur Verbindung SiC-enthaltender keramischer Elemente, dadurch gekennzeichnet, dass es die Schritte zum Anbringen einer Lotlegierung zwischen den Oberflächen der zu verbindenden keramischen Elemente aus Si und Rh und zum Erwärmen des Ganzen auf eine Löttemperatur von 1450°C bis 1600°C umfasst, um die Lötung zu realisieren, bei der Si 40 bis 60 Atomprozent der genannten Legierung bildet.

4. Herstellungsverfahren einer Verbindung nach Anspruch 3, dadurch gekennzeichnet, dass das Lot durch Beschichtung der Oberflächen mittels einer Suspension von Lotlegierungsteilchen in einem sich bei einer Temperatur von weniger als 1000°C verflüchtigenden Bindemittel aufgetragen wird.

5. Verfahren nach Anspruch 4, dadurch gekennzeichnet, dass die Suspension durch Verschmelzen von Silicium und Rhodium hergestellt wird, um eine Legierung zu erhalten, die Legierung abgekühlt wird, um ein erstarrtes Lot zu erhalten, das erstarrte Lot zu Pulver zermahlen wird und das Pulver mit dem Bindemittel vermischt wird.

6. Verfahren nach Anspruch 5, dadurch gekennzeichnet, dass das Verschmelzen im Sekundärvakuum bei einer Temperatur zwischen 1450 und 1600°C erfolgt.

7. Verfahren nach Anspruch 6, dadurch gekennzeichnet, dass die Korngröße des Lotpulvers 0,05 bis 0,1 mm beträgt.

8. Herstellungsverfahren einer Verbindung nach einem der Ansprüche 3 bis 7, dadurch gekennzeichnet, dass die Erwärmung durch einen Zyklus erfolgt, der eine erste Heizstufe auf eine Temperatur von 200 bis 400°C und eine zweite Heizstufe auf die Löttemperatur umfasst.

9. Verfahren nach Anspruch 8, dadurch gekennzeichnet, dass die Löttemperatur 1450 bis 1600°C beträgt.

## Claims

1. Joining of ceramic elements comprising SiC, by means of a brazed joint, characterized in that the brazed joint is formed of a braze alloy of Si and Rh, resistant to fluorine at temperatures of over 50°C in which Si represents 40 to 60 atomic % of said alloy.

2. Joining in accordance with claim 1, characterized in that Si represents 50 atomic % of said alloy.

3. Method for joining ceramic elements comprising SiC, characterized in that it comprises the stages of positioning the braze alloy of Si and Rh between the surfaces of the ceramic elements to be joined, and heating to a brazing temperature of 1450°C to 1600°C to obtain brazing, in which Si represents 40 to 60 atomic % of said alloy.

4. Method for manufacturing a joint in accordance with claim 3, characterized in that the braze alloy is placed in position by surface coating by means of a suspension of braze alloy particles in a volatilizable binding agent at a temperature of less than 1000°C.

5. Method in accordance with claim 4, characterized in that the suspension is prepared by fusion of silicon and rhodium in such a manner as to obtain an alloy, cooling the alloy to obtain a solid braze alloy, grinding the solid braze alloy into powder form and mixing the powder with the binding agent.

6. Method in accordance with claim 6, characterized in that fusion is carried out under a secondary vacuum at a temperature of between 1450°C and 1600°C.

7. Method in accordance with claim 6, characterized in that the braze powder has a grain size of 0.05 to 0.1 mm.

8. Method of manufacturing a joint in accordance with any of claims 3 to 7, characterized in that heating is carried out following a cycle comprising a first heating stage at a temperature of 200 to 400°C, and a second heating stage at brazing temperature.

9. Method in accordance with claim 8, characterized in that the brazing temperature is 1450 to 1600°C.
